(19) Europäisches Patentamt
European Patent Office
Office européen des brevets

(11) **EP 2 616 300 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **11766899.6**

(22) Anmeldetag: **06.09.2011**

(51) Int Cl.:
*B61C 17/12* (2006.01)     *B61L 15/00* (2006.01)
*G01B 21/22* (2006.01)     *G05G 1/04* (2006.01)

(86) Internationale Anmeldenummer:
**PCT/EP2011/065344**

(87) Internationale Veröffentlichungsnummer:
**WO 2012/034896 (22.03.2012 Gazette 2012/12)**

(54) **VERFAHREN ZUM BETREIBEN EINES POSITIONSGEBERS FÜR EIN MECHANISCHES BEWEGTEIL UND POSITIONSGEBER FÜR EIN MECHANISCHES BEWEGTEIL**

METHOD FOR OPERATING A POSITION INDICATOR FOR A MOVEABLE MECHANICAL COMPONENT AND POSITION INDICATOR FOR A MOVEABLE MECHANICAL COMPONENT

PROCÉDÉ POUR FAIRE FONCTIONNER UN INDICATEUR DE POSITION POUR UNE PIÈCE MOBILE MÉCANIQUE ET INDICATEUR DE POSITION POUR UNE PIÈCE MOBILE MÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2010 DE 102010045731**

(43) Veröffentlichungstag der Anmeldung:
**24.07.2013 Patentblatt 2013/30**

(73) Patentinhaber: **Siemens Mobility GmbH
81739 München (DE)**

(72) Erfinder: **WEBER, Matthias Alexander
91052 Erlangen (DE)**

(56) Entgegenhaltungen:
**EP-A2- 2 295 939          WO-A1-2004/079473
WO-A2-2011/107233     DE-U1-202009 001 387**

EP 2 616 300 B1

**Beschreibung**

Die Erfindung betrifft ein Verfahren zum Betreiben eines Positionsgebers für ein mechanisches Bewegteil, welches als drehbarer, auf einer Welle gelagerter Bedienhebel eines Eisenbahn-Triebfahrzeugs ausgebildet ist, wobei der Positionsgeber in Form eines Winkelgebers auf der Welle angebracht ist und einen analogen Sensor, der mit zunehmender Positionsänderung des Bewegteils einer nachgeordneten Auswerteschaltung ein zunehmendes Ausgangssignal zuführt.

Bei einem bekannten Verfahren dieser Art wird als mechanisches Bewegteil ein drehbares Bewegteil in Form eines Schalthebels benutzt, der auf seiner Welle einen Drehwinkelgeber als analogen Sensor aufweist. Dieser Drehwinkelgeber kann als Potentiometer, als optischer oder magnetischer Drehwinkelgeber etc. ausgeführt sein. Von diesem Drehwinkelgeber werden Analogwerte abgegeben und in einer Auswerteschaltung mit einem Analog-Digitalumsetzer in digitale Werte umgesetzt. Aus diesen digitalen Werten kann eine Reaktionsgröße gebildet werden, die dem jeweiligen Drehwinkel beziehungsweise der Stellung des Schalthebels entspricht. Erfasst werden dabei kontinuierliche Positionsänderungen des Schalthebels beziehungsweise des drehbaren Bewegteils, wobei der Drehwinkelgeber mit zunehmender Positionsänderung bzw. Drehänderung des Bewegteils ein zunehmendes bzw. ansteigendes Ausgangssignal abgibt.

Die internationale Veröffentlichung WO 2004/079473 A1 zeigt einen Bremshebel für Schienenfahrzeuge, der einen Schaft aufweist, an dessen einem Ende ein Handgriff angeordnet ist und der mit seinem anderen Ende in einer drehbaren Welle gelagert ist. Im Bereich der Welle ist ein Sensor zur Erfassung der Drehposition der Welle angeordnet, der einen auf der Welle befestigten Magneten und eine Mehrzahl an stationären Hallsensoren umfassen kann. Aus Redundanzgründen kann ein weiterer Sensor zur Erfassung der Drehposition der Welle vorgesehen sein. Die Ausgangssignale der Sensoren werden einem Prozessor zugeführt, der ein geeignetes Ausgangssignal zur Ansteuerung der Bremsen des Schienenfahrzeugs bereitstellt.

Die Gebrauchsmusterschrift DE 20 2009 001 387 U1 offenbart eine Schaltvorrichtung mit einem Grundmodul, das über ein Gehäuse und einem aus diesem herausragenden, schwenkbaren Schalthebel verfügt, und mit einem Gebermodul zur Erzeugung von elektrischen Signalen in Abhängigkeit von einer Stellung des Schalthebels. Ein Messwertgeber des Gebermodus liefert ein der Drehbewegung, insbesondere Winkelgeschwindigkeit oder Winkelbeschleunigung, entsprechendes Signal. Auch die eingestellte Winkelstellung und/oder die Anzahl der Umdrehungen der Welle lassen sich erfassen. Eine Messeinrichtung verfügt über geeignete Sensoren zur Aufnahme von Drehbewegungen, die als analoge oder digitale Signale über eine Schnittstelle ausgegeben und zur Steuerung eines geeigneten Gerätes verwendet werden können.

Aus der nachveröffentlichten, aber prioritätsälteren europäischen Patentanmeldung EP 2 295 939 A2 sind ein Verfahren und eine Vorrichtung zur Ermittlung des Feinpositionierwertes eines zu überwachenden Körpers, insbesondere der Drehbewegung einer Welle, bekannt. Die Welle ist mit einer Reihe von Permanentmagneten mit alternierender Polausrichtung so bestückt, dass diese in Drehrichtung gleiche Abstände besitzen und Messsegmente bilden, deren Längen- bzw. Winkelerstreckungen durch die erfindungsgemäße Vorrichtung fein aufgelöst werden sollen. Die zur Ermittlung der Feinposition der Welle erforderlichen Signale werden von Positionssensoren in Form von vier Hallsonden geliefert, die paarweise zusammengefasst sind. Jedes Paar ist antiseriell so geschaltet, dass seine Hallsonden von den Magnetfeldern der Permanentmagnete in entgegen gesetzter Richtung durchsetzt werden. Aufgrund der Gegeneinanderschaltung addieren sich die aus diesen Magnetfeldern resultierenden Signale, während sich von außen überlagerte Störungen gegenseitig aufheben. Die Hallsondenpaare geben ein periodisches Signal ab, das in einem Fall sinusförmig und im anderen Fall kosinusförmig ist. Die Signale werden alternierend verstärkt, jeweils digitalisiert und zwischengespeichert, um dann synchron in Form von Mittelwerten in einer Rechenschaltung weiterverarbeitet zu werden. Dabei wir jeder neue Mittelwert aus dem vorausgehend ermittelten Mittelwert und dem neuesten Einzelmesswert gebildet, indem jeder vor ihrer Summation mit einem Gewichtungsfaktor multipliziert und durch die Summe der Gewichtungsfaktoren dividiert wird.

Der Erfindung liegt die Aufgabe zugrunde, das bekannte Verfahren derart fortzuentwickeln, dass es zum zuverlässigen Erkennen eines fehlerbehafteten Verhaltens des Positionsgebers geeignet ist.

Zur Lösung dieser Aufgabe wird bei dem eingangs angegebenen Verfahren erfindungsgemäß als Positionsgeber ein Positionsgeber mit einem weiteren analogen Sensor verwendet wird, der der Auswerteschaltung mit zunehmender Positionsänderung des Bewegteils ein abnehmendes Ausgangssignal zuführt; jeweils aus dem zunehmenden und dem abnehmenden Ausgangssignal wird ein Summensignal gebildet, und es wird mit dem Summensignal überprüft, ob eine vorgegebene Toleranzgrenze überschritten wird.

Es ist zwar bekannt, bei einem Schalthebel einen Drehwinkelgeber mit zwei analogen Sensoren zu verwenden, jedoch haben diese Sensoren gleichläufige Kennlinien - mit zunehmendem Winkel wird jeweils das Ausgangssignal größer -, so dass sich bei einem solchen Geber ein fehlerhaftes Verhalten durch beispielsweise äußere Einflüsse nicht erfassen lässt.

Ein wesentlicher Vorteil des erfindungsgemäßen Verfahrens besteht darin, dass mit ihm zuverlässig ein fehlerhaftes Verhalten des Positionsgebers erkannt werden kann, wobei das gestörte Verhalten beispielsweise durch äußere Einflüsse, wie elektromagnetische Strahlung oder Wärmeeinwirkung, hervorgerufen sein kann. Dies gilt in besonders vorteilhafter Weise auch dann, wenn die Ausgangssignale beider analoger Sensoren um den gleichen Betrag verfälscht sind, weil auch diese Verfälschungen dadurch detektiert werden können, dass die Ausgangssignale der beiden Sensoren in entgegen gesetzter Richtung aus dem Toleranzbereich laufen.

Das Ergebnis der Überprüfung des Summensignals daraufhin, ob eine vorgegebene Toleranzgrenze überschritten wird - was dann auf einen Fehler hindeutet -, kann in unterschiedlicher Weise erfolgen. So ist es vorteilhaft, gegebenenfalls ein Warnsignal zu erzeugen, um bei der Durchführung des erfindungsgemäßen Verfahrens eine Meldung eines erkannten Fehlers zu erhalten. Gegebenenfalls ist es aber auch möglich, bei dem erfindungsgemäßen Verfahren ein Betätigungssignal zu erzeugen, mit dem im Falle eines erkannten Fehlers selbsttätig entsprechende Handlungen eingeleitet werden können.

Besonders vorteilhaft ist es bei dem erfindungsgemäßen Verfahren, wenn in dem Positionsgeber analoge Sensoren mit übereinstimmendem Verhalten bei äußeren Einflussgrößen verwendet werden, weil in diesem Falle der Toleranzbereich von beiden Sensoren gewissermaßen zu gleichen Anteilen genutzt werden kann. Als Sensoren können bei dem erfindungsgemäßen Verfahren Sensoren unterschiedlichster Bauweise zum Einsatz kommen. Besonders vorteilhaft erscheint es, Halbleitersensoren zu verwenden, die beispielsweise als Hall-Generatoren oder optische Sensoren ausgeführt sein können.

Auch induktive Sensoren sind geeignet sowie klassische Potentiometer.

Bei allen diesen analogen Sensoren unterschiedlicher Ausführungsform können durch äußere Einflüsse Veränderungen der Kennlinie eintreten, was bei einem Einsatz in Positionsgebern ohne weitere Vorkehrungen zu einer fehlerhaften Positionserfassung führt. Oft ist eine genaue Erfassung von Fehlern eines Positionsgebers von großer Bedeutung; dies gilt beispielsweise dann, wenn ein Positionsgeber als Winkelgeber bei einem mechanischen Bewegteil in Form eines Schalthebels eingesetzt wird, mit dem beispielsweise die Fahrt eines Schienenfahrzeugs gesteuert wird. In diesem Falle ist es sogar sicherheitsrelevant, Fehler des dem Schalthebel zugeordneten Positionsgebers rechtzeitig und eindeutig zu erfassen.

Der Erfindung liegt ferner die Aufgabe zugrunde, einen Positionsgeber für ein mechanisches Bewegteil mit einem analogen Sensor, der mit zunehmender Positionsänderung des Bewegteils einer nachgeordneten Auswerteschaltung ein zunehmendes Ausgangssignal zuführt, so fort zu entwickeln, dass sich, eine fehlerhafte Arbeitsweise zuverlässig mit großer Sicherheit erkennen lässt.

Zur Lösung dieser Aufgabe weist ein solcher Positionsgeber einen analogen weiteren Sensor auf, der der Auswerteschaltung mit zunehmender Positionsänderung des Bewegteils ein abnehmendes Ausgangssignal zuführt.

Durch diese Ausgestaltung des Positionsgebers ist in vorteilhafter Weise die Voraussetzung dafür geschaffen, dass bei Positionsänderungen unter dem Einfluss äußerer störender Einwirkungen, wie beispielsweise elektromagnetische Strahlung oder Wärmeeinwirkung, ein fehlerhaftes Arbeiten des Positionsgebers zuverlässig erfasst werden kann.

Die Erfassung der Ausgangssignale der beiden analogen Sensoren des erfindungsgemäßen Positionsgebers kann in unterschiedlicher Weise vorgenommen werden. Zur Lösung der Aufgabe weist die Auswerteschaltung eine mit den Ausgängen der analogen Sensoren verbundene Summierschaltung auf, der eine einen Toleranzbereich vorgebende Grenzwerte-Einheit nachgeordnet ist. Damit ist allein durch eine Summierschaltung und eine Grenzwerte-Einheit zusammen mit dem weiteren analogen Sensor ein Positionsgeber mit der vorteilhaften Eigenschaft geschaffen, Fehler seiner Arbeitsweise zuverlässig und in einfacher Weise zu erfassen.

Als analoge Sensoren kommen vor allem Halbleiter-Sensoren in unterschiedlicher Form, induktive Sensoren und auch Potentiometer in Frage. Dabei spielt die unterschiedliche Ausführungsform keine Rolle, und es ist auch nicht von Bedeutung, welcher Art die äußeren Einflüsse auf den Positionsgeber sind, die die Kennlinie der Sensoren verändern.

Der Positionsgeber kann auch hinsichtlich seines mechanischen Bewegteils unterschiedlich ausgebildet sein; vorteilhaft ist eine Ausbildung als Winkelgeber, der insbesondere bei Schalthebeln Verwendung findet, wie sie in Triebfahrzeugen von Schienenfahrzeuge verbreitet sind.

Zur weiteren Erläuterung der Erfindung sind in

Figur 1    ein Ausführungsbeispiel des erfindungsgemäßen Positionsgebers, in

Figur 2    Kennlinien der analogen Sensoren des erfindungsgemäßen Positionsgebers ohne eine Störbeeinflussung von außen und in

Figur 3    Kennlinienbild derselben analogen Sensoren bei Einwirkung äußerer Störeinflüsse dargestellt.

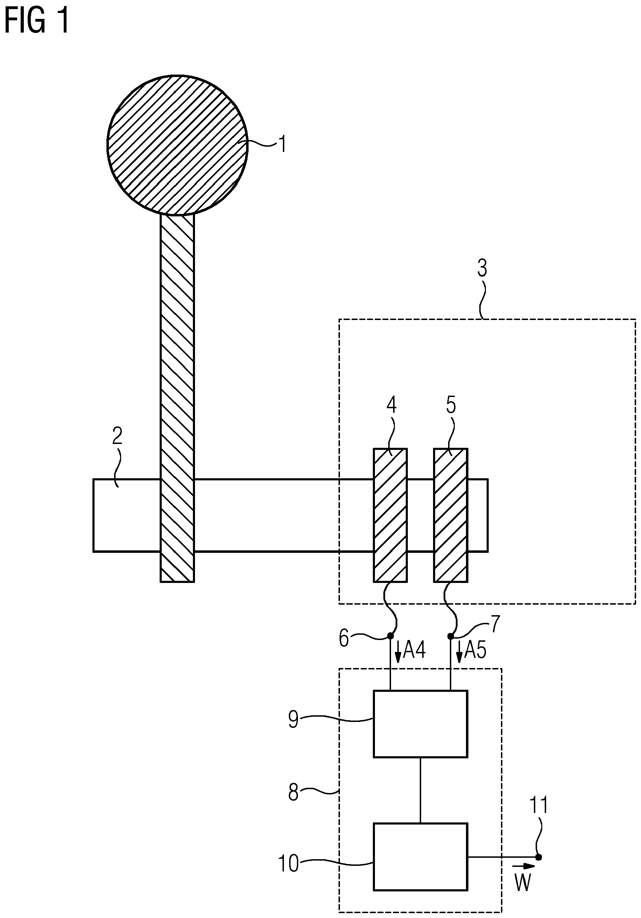

Die in Figur 1 dargestellte Anordnung weist ein mechanisches Bewegteil 1 auf, das in dem vorliegenden Fall von einem Schalthebel, beispielsweise im Führerstand einer Lokomotive, gebildet ist. Das mechanische Bewegteil 1 ist auf einer Welle 2 gelagert, auf der auch ein Positionsgeber 3 in Form eines Winkelgebers angebracht ist. Der Positionsgeber 3 weist einen analogen Sensor 4 und einen weiteren analogen Sensor 5 auf. Bei diesen Sensoren 4 und 5 kann es sich beispielsweise um Potentiometer oder auch um an sich bekannte optische oder magnetisch arbeitende Drehwinkelerfassungseinrichtungen handeln.

Ausgänge 6 und 7 der analogen Sensoren 4 und 5 sind mit einer Auswerteschaltung 8 verbunden, die eingangsseitig mit einer Summierschaltung 9 ausgerüstet ist. Der Summierschaltung 9 ist eine Grenzwerte-Einheit 10 nachgeordnet, die an ihrem Ausgang 11 ein Warn- oder Betätigungssignal W abgibt.

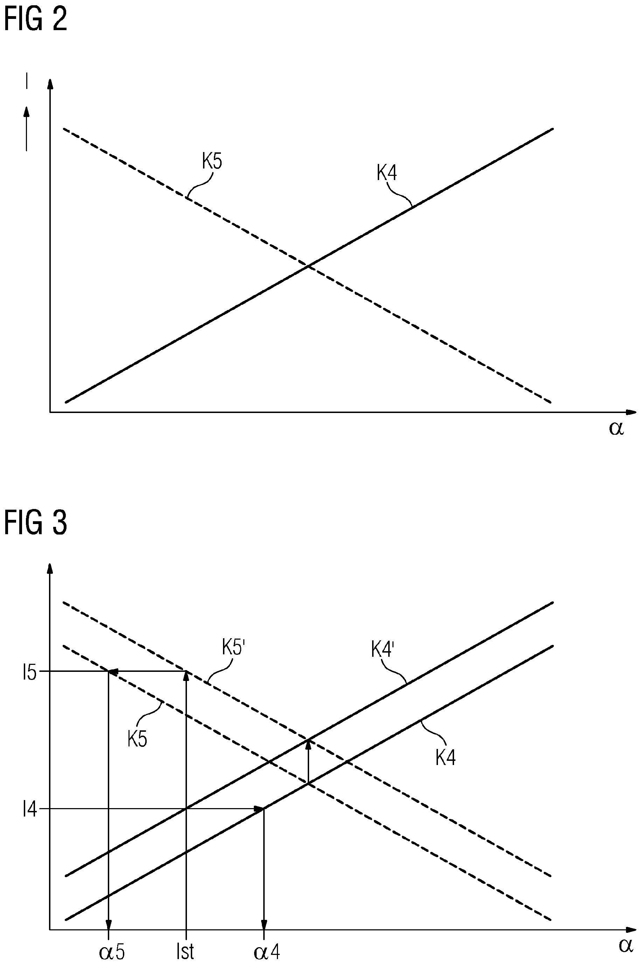

Die analogen Sensoren 4 und 5 haben Kennlinien, wie sie die Figur 2 für den Fall eines Betriebs ohne äußere Störeinflüsse zeigt. Darin ist zu erkennen, dass der eine analoge Sensor 4 eine Kennlinie K4 aufweist, die mit zunehmendem Winkel α der Welle 2 einen zunehmend größeren Strom I abgibt; mit zunehmender Positionsänderung des mechanischen Bewegteils 1 in Form des Schalthebels wird also von dem einen analogen Sensor 4 ein zunehmendes bzw. ansteigendes Ausgangssignal A4 an die Summierschaltung 9 abgegeben (vgl. Figur 1).

Der weitere Sensor 5 weist im störungsfreien Betrieb gemäß der Figur 2 eine Kennlinie K5 auf, gemäß der mit zunehmender Positionsänderung bzw. Drehung α der Welle 2 der Strom I kleiner wird beziehungsweise abnimmt. Mit zunehmender Positionsänderung des mechanischen Bewegteils 1 in Form des Schalthebels wird also von dem weiteren analogen Sensor 5 ein abfallendes bzw. abnehmendes Ausgangssignal A5 an die Summierschaltung 9 abgegeben (siehe auch Figur 1).

Beide Kennlinien gemäß Figur 2 gelten - wie oben bereits angemerkt - nur für den Fall, dass beim Betrieb des Positionsgebers 3 äußere Einflüsse, wie elektromagnetische Felder oder Wärmestrahlung, nicht vorhanden sind. Diese Idealbedingung ist aber in der Regel nicht gegeben, vielmehr ergeben sich - wie Figur 3 zeigt - Verschiebungen der Kennlinie K4 zu einer Kennlinie K4' in Folge äußerer Einflüsse. Dies bedeutet, dass in einer mit Ist bezeichneten Stellung der Welle 2 der Sensor 4 einen tatsächlich zu hohen Strom I4 erzeugt, mit dem als Signal A4 die Summierschaltung 9 beaufschlagt wird. Diesem Strom I4 ist, wie die Figur 3 zeigt, ein verfälschter Drehwinkel α4 zugeordnet.

Entsprechend ergibt sich bei dem weiteren Sensor 5 im Falle der gezeigten Ist-Stellung des mechanischen Bewegteils 1 wegen der durch äußere Beeinflussungen verschobenen Kennlinie K5' ein zu hoher Strom I5, der als Ausgangsgröße A5 der Summierschaltung 9 zugeführt wird. Dem Strom I5 ist ein verfälschter Drehwinkel α5 zugeordnet.

Nimmt man an, dass die Auswertung der Ströme I4 und I5 in der Auswerteschaltung 8 digital erfolgt, und geht man davon aus, dass jeder der beiden Sensoren 4 und 5 beispielsweise jeweils einen maximal möglichen Sensorwert SM = 1024 hat, dann lässt sich ein Fehler durch äußere Einflüsse dadurch ermitteln, dass nach Analog-Digital-Umsetzung der Ausgangsgrößen A4 und A5 in digitale Sensorwerte SW4 und SW5 in der Summierschaltung 9 zunächst ein Summensignal SS gebildet wird SS = SW4 + SW5.

Anschließend wird in der Grenzwerte-Einheit 10 unter Berücksichtigung eines maximal möglichen Grenzwertes SM unter Benutzung nachstehender Formel überprüft, ob ein Toleranzgrenze TG überschritten ist und damit ein fehlerhaftes Verhalten des Positionsgebers 3 vorliegt:

$$|(SW4 + SW5) - SM| > TG$$

Dabei ist die Toleranzgrenze TG frei wählbar und soll, um ein Beispiel zu nennen, beispielsweise +/- 50 betragen. Errechnet sich also ausgehend von SM = 1024 eine Summe kleiner als 974 oder größer als 1074, dann handelt es sich um das Vorliegen einer nicht mehr hinnehmbaren Störung im Verhalten des Positionsgebers, und es wird dann mittels der Grenzwerte-Einheit 10 ein Warnsignal W am Ausgang 11 der Auswerteschaltung 8 erzeugt.

**Patentansprüche**

1. Verfahren zum Betreiben eines Positionsgebers (3) für ein mechanisches Bewegteil (1), welches als drehbarer, auf einer Welle (2) gelagerter Bedienhebel eines Eisenbahn-Triebfahrzeugs ausgebildet ist, wobei der Positionsgeber (3) in Form eines Winkelgebers auf der Welle (2) angebracht ist und einen analogen Sensor (4), der mit zunehmender Positionsänderung des Bewegteils (1) einer nachgeordneten Auswerteschaltung (8) ein zunehmendes Ausgangssignal (A4) zuführt, und einen weiteren Sensor (5) verwendet, der der Auswerteschaltung (8) mit zunehmender Positionsänderung des Bewegteils (1) ein abnehmendes Ausgangssignal (A5) zuführt, wobei jeweils aus dem zunehmenden und dem abnehmenden Ausgangssignal (A4, A5) ein Summensignal (SS) gebildet wird und wobei mit dem Summensignal (SS) überprüft wird, ob eine vorgegebene Toleranzgrenze (TG) überschritten ist.

2. Verfahren nach Anspruch 1, **dadurch gekennzeichnet, dass** bei einem Überschreiten der Toleranzgrenze (TG) ein Warnsignal (W) und/oder ein Betätigungssignal erzeugt wird.

3. Verfahren nach Anspruch 1 oder 2, **dadurch gekennzeichnet, dass** in dem Positionsgeber Sensoren mit übereinstimmendem Verhalten bei äußeren Einflussgrößen verwendet werden.

4. Verfahren nach einem der vorangehenden Ansprüche, **dadurch gekennzeichnet, dass** Halbleiter-Sensoren verwendet werden.

5. Verfahren nach einem der Ansprüche 1 bis 3, **dadurch gekennzeichnet, dass** induktive Sensoren verwendet werden.

6. Verfahren nach einem der Ansprüche 1 bis 3, **dadurch gekennzeichnet, dass** als Sensoren Potentiometer verwendet werden.

7. Positionsgeber (3) für ein mechanisches Bewegteil (1), welches als drehbarer, auf einer Welle (2) gelagerter Bedienhebel eines Eisenbahn-Triebfahrzeugs ausgebildet ist, wobei der Positionsgeber (3) in Form eines Winkelgebers auf der Welle (2) angebracht ist und einen analogen Sensor (4), der mit zunehmender Positionsänderung des Bewegteils (1) einer nachgeordneten Auswerteschaltung (8) ein zunehmendes Ausgangssignal (A4) zuführt, und einen weiteren Sensor (5) aufweist, der der Auswerteschaltung (8) mit zunehmender Positionsänderung des Bewegteils (1) ein abnehmendes Ausgangssignal (A5) zuführt, und wobei die Auswerteschaltung (8) eine mit den Ausgängen der Sensoren (4, 5) verbundene Summierschaltung (9) aufweist, der eine eine Toleranzgrenze (TG) vorgebende Grenzwerte-Einheit (10) nachgeordnet ist.

8. Positionsgeber nach Anspruch 7, **dadurch gekennzeichnet, dass** die Sensoren Halbleiter-Sensoren sind.

9. Positionsgeber nach Anspruch 7 oder 8, **dadurch gekennzeichnet, dass** die Sensoren induktive Sensoren sind.

10. Positionsgeber nach Anspruch 7, **dadurch gekennzeichnet, dass** die Sensoren Potentiometer sind.

**Claims**

1. Method for operating a position sensor (3) for a mechanical moving part (1) which is in the form of a rotatable operating lever of a railway traction vehicle that is mounted on a shaft (2), wherein the position sensor (3) is fitted on the shaft (2) in the form of an angle sensor and uses an analogue sensor (4), which supplies an increasing output signal (A4) to an evaluation circuit (8) arranged downstream with an increasing position change of the moving part (1), and uses a further sensor (5), which supplies a decreasing output signal (A5) to the evaluation circuit (8) with an increasing position change of the moving part (1), wherein a sum signal (SS) is respectively formed from the increasing and decreasing output signals (A4, A5), and wherein the sum signal (SS) is used to check whether a predefined tolerance limit (TG) is exceeded.

2. Method according to Claim 1, **characterized in that** a warning signal (W) and/or an actuation signal is/are generated if the tolerance limit (TG) is exceeded.

3. Method according to Claim 1 or 2, **characterized in that** sensors with a corresponding behaviour in the case of external influencing variables are used in the position sensor.

4. Method according to one of the preceding claims, **characterized in that** semiconductor sensors are used.

5. Method according to one of Claims 1 to 3, **characterized in that** inductive sensors are used.

6. Method according to one of Claims 1 to 3, **characterized in that** potentiometers are used as sensors.

7. Position sensor (3) for a mechanical moving part (1) which is in the form of a rotatable operating lever of a railway traction vehicle that is mounted on a shaft (2), wherein the position sensor (3) is fitted on the shaft (2) in the form of an angle sensor and has an analogue sensor (4), which supplies an increasing output signal (A4) to an evaluation circuit (8) arranged downstream with an increasing position change of the moving part (1), and has a further sensor (5), which supplies a decreasing output signal (A5) to the evaluation circuit (8) with an increasing position change of the moving part (1), and wherein the evaluation circuit (8) has a summing circuit (9) which is connected to the outputs of the sensors (4, 5) and downstream of which a limit value unit (10) which specifies a tolerance limit (TG) is arranged.

8. Position sensor according to Claim 7, **characterized in that** the sensors are semiconductor sensors.

9. Position sensor according to Claim 7 or 8, **characterized in that** the sensors are inductive sensors.

10. Position sensor according to Claim 7, **characterized in that** the sensors are potentiometers.

**Revendications**

1. Procédé pour faire fonctionner un indicateur de position (3) pour une pièce mobile mécanique (1) laquelle est réalisée en tant que levier de commande, tournant, placé sur un arbre (2), d'un engin moteur ferroviaire, où l'indicateur de position (3) est placé, sous forme d'un indicateur d'angle, sur l'arbre (2), et un capteur analogique (4) qui envoie à un circuit d'évaluation (8) en aval un signal de sortie (A4) qui augmente à mesure que le changement de position de la pièce mobile (1) augmente et utilise un autre capteur (5) qui envoie au circuit d'évaluation (8) un signal de sortie (A5) qui diminue à mesure que le changement de position de la pièce mobile (1) augmente, dans lequel à chaque fois est formé un signal d'addition (SS) à partir du signal de sortie qui augmente et du signal de sortie qui diminue (A4, A5), et dans lequel on vérifie à l'aide du signal d'addition (SS) si une limite de tolérance (TG) prédéfinie est dépassée.

2. Procédé selon la revendication 1, **caractérisé en ce qu'**est/sont créé(s) un signal d'avertissement (W) et/ou un signal d'actionnement, lors d'un dépassement de la limite de tolérance (TG).

3. Procédé selon la revendication 1 ou 2, **caractérisé en ce que** dans l'indicateur de position, sont utilisés des capteurs avec un comportement concordant en présence de grandeurs d'influence extérieures.

4. Procédé selon l'une des revendications précédentes, **caractérisé en ce que** sont utilisés des capteurs à semiconducteur.

5. Procédé selon l'une des revendications 1 à 3, **caractérisé en ce que** sont utilisés des capteurs inductifs.

6. Procédé selon l'une des revendications 1 à 3, **caractérisé en ce que** sont utilisés des potentiomètres en tant que capteurs.

7. Indicateur de position (3) pour une pièce mobile mécanique (1) laquelle est réalisée en tant que levier de commande, tournant, placé sur un arbre (2), d'un engin moteur ferroviaire, où l'indicateur de position (3) est placé, sous forme d'un indicateur d'angle, sur l'arbre (2), et un capteur analogique (4) qui envoie à un circuit d'évaluation (8) en aval un signal de sortie (A4) qui augmente à mesure que le changement de position de la pièce mobile (1) augmente, et comporte un autre capteur (5) qui envoie au circuit d'évaluation (8) un signal de sortie (A5) qui diminue à mesure que le changement de position de la pièce mobile (1) augmente, et dans lequel le circuit d'évaluation (8) comporte un circuit d'addition (9) relié aux sorties des capteurs (4, 5) auquel est montée en aval une unité de valeurs-limites (10) prédéfinissant une limite de seuil (TG).

8. Indicateur de position selon la revendication 7, **caractérisé en ce que** les capteurs sont des capteurs à semiconducteur.

9. Indicateur de position selon la revendication 7 ou 8, **caractérisé en ce que** les capteurs sont des capteurs inductifs.

10. Indicateur de position selon la revendication 7, **caractérisé en ce que** les capteurs sont des potentiomètres.

FIG 1

## FIG 2

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004079473 A1
- DE 202009001387 U1
- EP 2295939 A2